# EUROPEAN PATENT APPLICATION

(11) **EP 2 346 289 A1**
(43) Date of publication of application: **20.07.2011**
(21) Application number: 10360002.9
(22) Date of filing: 14.01.2010
(51) Int. Cl.: H04W 52/02

(54) **Reduction of power consumption of a node B**

(71) Applicant: Alcatel Lucent, 75007 Paris (FR)
(72) Inventor: Wong, Shin Honrg, Witshire, SN14 0SP (GB); Puddle, Nicola, Swindon, Withshire SN4 0ND (GB)
(74) Representative: Coghlan, Judith Elizabeth Kensy

(57) **Abstract**

A network node and a method of controlling a network node in a wireless telecommunications network. The method comprises the steps of:
(i) determining whether data traffic between user equipment and the network node has reached a predetermined threshold and,
if said predetermined threshold has been reached,
(ii) implementing a modified communication regime between the network node and the user equipment in which the network node is periodically switched between:
a first state in which data transfer between the network node and the user equipment is supported, and
a second state in which data transfer between the network node and the user equipment is limited. Also provided is user equipment and a method of controlling user equipment to implement a corresponding modified communication regime.

## Description

### FIELD OF THE INVENTION

The present invention relates to a method for controlling a network node in a wireless communications network, a network node, a method for controlling user equipment in a wireless telecommunications network, user equipment and computer program products.

### BACKGROUND

Wireless telecommunications networks are known. In a cellular system, radio coverage is provided by area. Those areas of radio coverage are known as cells. A base station is located in each cell to provide the radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

In a universal mobile telecommunications system (UMTS) a base station (also known as a NodeB) continuously transmits a pilot signal. That pilot signal may also be known as a common pilot channel or C-PICH. The base station typically broadcasts the pilot channel all the time irrespective of whether there is any data traffic or user equipment in the cell. Transmissions from the base station are performed via one or more power amplifiers. Power amplifiers consume a large proportion of the power demanded by a base station.

It will be appreciated that such a "continuously on" arrangement helps to ensure that user equipment can reliably establish a connection and enables user equipment to roam through the network. However, a problem with such an arrangement is that such a wireless telecommunications network consumes a large amount of power.

It is desired to provide a wireless telecommunications network offering improved power efficiency.

### SUMMARY

According to a first aspect there is provided a method of a method of controlling a network node in a wireless telecommunications network, said method comprising the steps of:
determining whether data traffic between user equipment and said network node has reached a predetermined threshold and, if said predetermined threshold has been reached,
implementing a modified communication regime between said network node and said user equipment in which said network node is periodically switched between:
   a first state in which data transfer between said network node and said user equipment is supported, and
   a second state in which data transfer between said network node and said user equipment is limited.

The first aspect recognises that there can be comparatively long periods of time during which no, or very few, items of user equipment need to be supported by network node. Such situations may occur, for example, at night in rural areas. In such a situation, those network nodes may be powered for long periods of time unnecessarily. Whilst techniques exist to try and help to ameliorate this problem, none of the existing techniques have proved to be satisfactory since they generally make predictions about network usage and it is often the case that such predictions can be wrong. If a prediction is incorrect and a base station is turned off on the basis of a low traffic prediction, any user equipment in the area served by that base station may be left unable to communicate successfully with the wireless telecommunications network. Incorrect predictions can lead to either an undercapacity in the network, which causes resultant user problems, or maintains more capacity in the network than is necessary, which unnecessarily wastes power.

In particular, the first aspect recognises that it is possible to reduce power consumption in a network and yet maintain coverage and low-level communication with user equipment in periods of low network traffic.

It will be understood that the term "network node" is envisaged to cover traditional base stations such as Node Bs and also future base station architectures such as those involving eNodeBs. Furthermore, the term "network node" is envisaged to refer to base stations supporting smaller sized cells within a macro cell sometimes referred to as micro cells, pico cells or femto cells. Furthermore, a network node may, for example, comprise a remote network controller.

It will be appreciated that the term "data traffic" encompasses all bits of data passed between user equipment and a network node and, in particular, covers (but is not limited to): voice data, video data, FTP data, paging information and other scheduling and control information.

Accordingly, the first aspect recognises that a key step in identifying whether power saving measures can be implemented is through assessment of whether a network node is currently supporting user equipment, and the level of data traffic occurring between that user equipment and the network node. If a network node is not supporting user equipment or is supporting a relatively low number of user equipment, that network node would be likely to determine that the data traffic being experienced would be sufficiently low for it to be a candidate for implementation of a modified communication regime which saves power. Such a modified communication regime may allow a power saving to be made across the telecommunications network at those locations where it is possible to do so. Accordingly, it can be seen that power use across the network can be dynamically adapted to suit current operating conditions thereby enabling enhanced power reductions to be achieved.

In particular, the first aspect further recognises that a network node may not be required to continuously transmit or receive and yet still offer skeleton coverage to user equipment located in the geographical area supported by the network node. The network node may implement a modified communication regime in which it is periodically switched between a first state in which data transferred between the network node and the user equipment is fully supported and a second state in which data transfer between the network node and said user equipment is limited.

In the first state which supports data transfer between a network node and user equipment, the power may be reduced. However, it will be appreciated that the first state may simply represent normal operating conditions.

In the second state, data transfer between said network node and the user equipment may be limited and may not be possible at all.

In one embodiment, when in the second state, the network node reduces its transmission power by switching to a reduced transmission power state which reduces user equipment coverage provided by the network node.

Accordingly, when it is established that data traffic between user equipment and a network node is sufficiently low, the network node may switch to a reduced transmission power state by turning down the power provided to power amplifiers required to transmit to user equipment. It will be understood that, in this way, the continuous transmission of pilot and broadcast information from a network node to user equipment may be reduced.

In one embodiment, when in the second state the network node switches to an inactive transmission state which provides no user equipment coverage by the network node.

Accordingly, it will be understood that it is possible to reduce the power provided to power amplifiers at the network node to substantially zero such that the network node is in an inactive transmission state and provides no user equipment coverage. In that state it is no longer able to transmit to user equipment located in its cell.

In one embodiment, when in the second state, the network node reduces its reception power by switching to a reduced reception power state which reduces user equipment coverage provided by the network node.

Accordingly, if it is recognised that network traffic in a particular cell is sufficiently low and has met the predetermined threshold, the network node may be operable to reduce reception power, or turn off its receiver, such that data sent from user equipment to the network node may not be received in the second state.

In one embodiment, when in the second state, the network node switches to an inactive reception state which provides no user equipment coverage by the network node.

Accordingly, the network node may switch to an inactive reception state in the second state such that data sent from user equipment to the network node is not received thereby maintaining communication with said user equipment only when the network node is in the first state.

In one embodiment, the step (i) comprises determining whether the threshold has been reached by determining whether the level of data traffic sent from the network node to the user equipment has reached a predetermined level.

In one embodiment, step (i) comprises determining whether the threshold has been reached by determining whether the level of data traffic sent to the network node from the user equipment has reached a predetermined level.

In one embodiment, step (i) comprises determining whether the threshold has been reached by determining whether the level of data traffic to and from the network node from and to the user equipment has reached a predetermined level.

It will be appreciated that when determining the level of data traffic being experienced between user equipment and a network node it is possible to consider either uplink traffic (data being transferred from user equipment to the network node), downlink traffic (data being transferred from the network node to user equipment) or a combination of both. It will be appreciated that it is possible to implement power saving measures in respect of up- or down-link communications independently from one another and, when considering which of those power saving modes to implement, it may be necessary to consider only the data traffic level of that particular mode (up-or down- link) of communication.

In one embodiment, the periodic switching between the first state and the second state is substantially identical for both data transfer to the network node from the user equipment and data transfer from the network node to the user equipment.

In one embodiment, the periodic switching between the first state and the second state differs for data transfer to the network node from the user equipment and data transfer from the network node to the user equipment.

It will be appreciated that periodic switching of the network node from the first state to the second state offers "discontinuous" transmission and/or reception. Accordingly, discontinuous transmission and discontinuous reception of the node B need not run concurrently. That is to say, the network node can be in discontinuous reception mode but still continue to continuously transmit downlink traffic. For example, the network node may continue to transmit the common pilot channel or broadcast information. In such a scenario, user equipment can only transmit (for example, acknowledgements) when the network node receiver is awake. Similarly, a network node may be in discontinuous transmission mode but still continue to continuously receive uplink traffic. In such a mode, user equipment may be expected to operate without (or only with infrequent) pilot channel communication from the network node.

Furthermore, it will be appreciated that the discontinuous transmission and discontinuous reception cycles implemented by the first aspect may be substantially independent. However, it will be appreciated that there may be advantages associated with performing discontinuous transmission and discontinuous reception together such that the period of switching for both is substantially identical and substantially concurrent since, with a common wake up time for both receiver and transmitter at the network node, the user equipment and network node need only "wake up" once to transmit and receive information and data to be sent to the network.

In one embodiment, the method further comprises the step of: transmitting a signal including an indication of commencement of the modified communication regime, the switching period and the data transfer between the base station and the user equipment to be modified.

It will be appreciated that user equipment located in a cell served by a network node will require sufficient information to identify the operation of that network node such that they can successfully maintain communication with the network as a whole. It will further be appreciated that if user equipment expects to communicate with a network node whilst it is in the second state it may not successfully do so and the service offered to an end user will therefore be compromised. Accordingly, it may be necessary for a network node to inform user equipment operating in its cell that it is implementing a modified data transmission and reception regime. It will be appreciated that if a network node is implementing a modified communication all user equipment in that cell will be require to wake up at the same time for transmission and or reception thereby minimising network node wake up time. It will further be appreciated that if a network node is operating in discontinuous and/or reception mode user equipment in that cell will not be in an active state. That is to say, they will not be handling voice information or other active user information (the user equipment in a cell served by a network node in which a modified communication regime is implemented are likely to be in a non cell-DCH state).

In one embodiment, the period comprises an integer number of system frame numbers. In 3GPP, a system frame number (SFN) is used to identify the framing and timing of a cell served by a network node. To synchronise user equipment transmission and reception cycles the wake up time may be based upon the system frame number. According to such an implementation, a network node and all user equipment served by that network node wake up at a specific system frame number. That SFN may be calculated using an algorithm which depends on the cycle of discontinuous transmission and/or reception. It will be appreciated that parameters needed to calculate the transmission and reception cycles (i.e. at which SFN to wake up and the length of the wake up time) can be configured by the operator. Those parameters may be indicated and transmitted to user equipment in the cell served by a network node.

It will be further appreciated that the wake up cycle may be related to the particular location of the network node and the likely operating conditions of that network node, for example, the cycle of wake up time may be calculated based on the expected speed of user equipment in the cell. It will be appreciated that, for example, for those network nodes serving a motorway user equipment may be expected to move within the cell relatively quickly. User equipment that is likely to move very quickly may need more frequent pilot (C-PICH) updates and hence a faster discontinuous transmission and/or reception cycle.

Furthermore, it will be appreciated that there may be differences in synchronisation amongst user equipment served by a particular network node and that the network node will therefore need to cater for that lack of synchronisation by waking up a few system frames earlier (or mid frame) and going back to sleep a few frames later (or mid frame).

A synchronisation method, for example by using system frame numbers, may be used by a network node implementing discontinuous transmission based on downlink traffic. In such a case, a network node may signal commencement of the discontinuous transmission to all user equipment in its cell via a broadcast message (for example a master information block). It will be understood that the network node will be required to specify at which time discontinuous transmission will start. In the case where signal frame numbers are used, the network node may specify in which signal frame number discontinuous transmission may start. System frame numbers offer a common parameter whereby the network node and user equipment may determine when they need to wake up so that downlink traffic may occur. It will be appreciated that a network node may also decide when to exit discontinuous transmission mode based on an increased amount of downlink traffic.

Furthermore, it will be appreciated that a network node may decide to base discontinuous reception based on a sufficiently low level of uplink traffic which may be determined via scheduling information or Random Access Channel (RACH) messages sent by user equipment to a network node. In a manner analogous to discontinuous transmission, a network node may then require to broadcast a start time for discontinuous reception to user equipment in its cell. If using system frame numbers as a common parameter, a network node may choose to broadcast the SFN in which discontinuous reception is scheduled to commence. A network node may decide when to exit discontinuous reception mode based on an increased amount of determined uplink traffic in its cell.

A second aspect provides a computer program product operable, when executed on a computer, to perform the method steps of the first aspect.

A third aspect provides a network node for a wireless telecommunications network, the network node comprising:
determination logic operable to determine whether data traffic between user equipment and the network node has reached a predetermined threshold; and
implementation logic, operable, if the predetermined threshold has been reached, to implement a modified communication regime between the network node and the user equipment in which the network node is periodically switched between:
   a first state in which data transfer between the network node and the user equipment is supported, and
   a second state in which data transfer between the network node and the user equipment is limited.

In one embodiment, when in the second state the network node is operable to reduce its transmission power by switching to a reduced transmission power state which reduces user equipment coverage provided by the network node.

In one embodiment, when in the second state the network node is operable to switch to an inactive transmission state in which the network node provides no user equipment coverage.

In one embodiment, when in the second state the network node is operable to reduce its reception power by switching to a reduced reception power state which reduces user equipment coverage provided by the network node.

In one embodiment, when in the second state the network node is operable to switch to an inactive reception state in which the network node provides no user equipment coverage.

In one embodiment, the determination logic is operable to determine whether the threshold has been reached by determining whether the level of data traffic sent from the network node to the user equipment has reached a predetermined level.

In one embodiment, the determination logic is operable to determine whether the threshold has been reached by determining whether the level of data traffic sent to the network node from the user equipment has reached a predetermined level.

In one embodiment, the periodic switching between the first state and the second state is substantially identical for both data transfer to the network node from the user equipment and data transfer from the network node to the user equipment.

In one embodiment, the periodic switching between the first state and the second state differs for data transfer to the network node from the user equipment and data transfer from the network node to the user equipment.

In one embodiment, the network node further comprises:
Transmission logic, operable to transmit a signal including an indication of commencement of the modified communication regime, the switching period and the data transfer between the network node and the user equipment to be modified.

A fourth aspect provides, a method of controlling user equipment in a wireless telecommunications network, the method comprising the steps of:
receiving an indication of a modified communication regime between a network node and the user equipment in which the network node is periodically switched between:
   a first state in which data transfer between the network node and the user equipment is supported, and
   a second state in which data transfer between the network node and the user equipment is limited; and
   implementing a corresponding modified communication regime in which the user equipment is operable to communicate with the network when the network node is in the first state.

In one embodiment, when in the corresponding modified communication regime, the method further comprises the steps of:
monitoring a measurement quantity indicative of strength of a communication link between the network node and the user equipment, and
if said measurement quantity passes a predetermined threshold, exiting the corresponding modified communication regime.

Accordingly, the method allows user equipment to perform cell reselection whilst operating according to a modified communication regime. By fully waking up, and returning to a normal mode of operation, user equipment is able to look for other possible base stations to reselect to. It will be appreciated that user equipment operating in this manner need not affect the mode of operation of a base station. If a base station is operating in a discontinuous mode it need not be aware that user equipment is performing cell reselection as long as user equipment transmit in accordance with a correct cycle.

The monitored measurement quantity may comprise, for example, monitoring received pilot (C-PICH) signal strength, or the measured Signal to Noise and Interference Ratio on the pilot channel.

The monitored measurement quantity may be monitored whilst the network node is in the first state.

A fifth aspect provides a computer program product operable, when executed on a computer, to perform the method steps of the fourth aspect.

A sixth aspect provides user equipment for a wireless telecommunications network, the user equipment comprising:
reception logic operable to receive an indication of a modified communication regime between a network node and the user equipment in which the network node is periodically switched between:
   a first state in which data transfer between the network node and the user equipment is supported, and a second state in which data transfer between the network node and
   the user equipment is limited; and
   implementing logic, operable to implement a corresponding modified communication regime in which the user equipment is operable to communicate with the network node when the network node is in the first state.

In one embodiment, the user equipment further comprises:
monitoring logic operable, when user equipment is in the corresponding modified communication regime, to monitor a measurement quantity indicative of strength of a communication link between the network node and the user equipment, and
if said measurement quantity passes a predetermined threshold, exiting the corresponding modified communication regime.

The monitored measurement quantity may comprise, for example, monitoring received pilot (C-PICH) signal strength, or the measured Signal to Noise and Interference Ratio on the pilot channel.

The monitored measurement quantity may be monitored whilst the network node is in the first state.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiment of the present invention will be described further, with reference to the accompanying drawings in which:
Figure 1 illustrates schematically the main components of a mobile telecommunications network according to one embodiment;
Figure 2 is a schematic representation of a network node including logic operable to carry out a control method in accordance with one aspect;
Figure 3 is a flowchart showing schematically the main processing steps for controlling a network node in a wireless telecommunications network in accordance with one aspect;
Figure 4 illustrates a schematic representation of an implementation of a modified communication regime according to one aspect; and
Figure 5 illustrates a schematic representation of user equipment according to one aspect moving between network node operating according to a modified communication regime.

### DESCRIPTION OF THE EMBODIMENTS

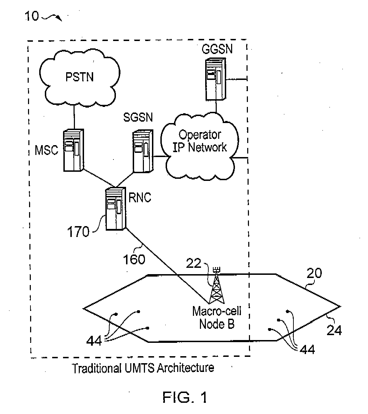

Figure 1 illustrates a wireless communication system, generally 10, according to one embodiment. User equipment 44 roam through the wireless communication system 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors. Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication system 10 is managed by.a radio network controller 170. The radio network controller 170 controls the operation of the wireless communications system 10 by communicating with the base stations 22 over a backhaul communications link 160. The network controller 170 also communicates with the user equipment 44 via their respective radio links in order to efficiently manage the wireless communication system 10.

The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates with service general packet radio service support nodes (SGSNs) 220 and a gateway general packet radio support node (GGSN) 180. The GGSN then communicates with a packet-switch core 190 such as, for example, the Internet.

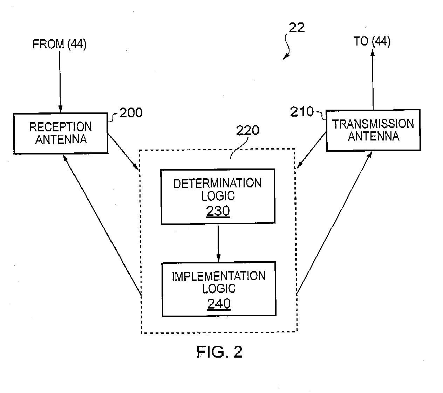

Figure 2 is a schematic representation of a network node, in this case a base station 22, including logic operable to carry out a control method according to one aspect. Base station 22 comprises a reception antenna 200, a transmission antenna 210 and base station control unit 220. Reception antenna is operable to receive messages, data and information from user equipment 44 in a cell served by base station 22. Transmission antenna 210 is operable to transmit data and information to user equipment 44 located in the cell served by base station 22.

Base station controller 220 further comprises determination logic 230 and implementation logic 240. It will be understood that reception antenna 200 and transmission antenna 210 are both operable to communicate with controller 220 and that controller 220 is operable to communicate with reception antenna and transmission antenna 200, 210 respectively.

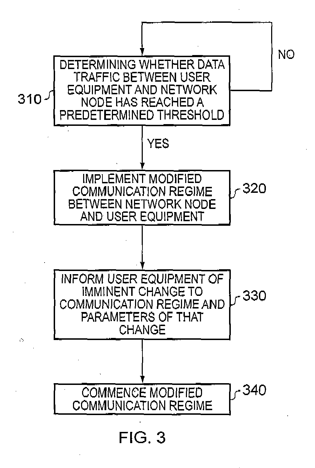

The operation of base station 22 as depicted in Figure 2 will be described in more detail in relation to Figure 3.

Figure 3 is a flowchart showing schematically the main processing steps for controlling a network node in accordance with one aspect. Base controller 220 receives information from transmission antenna 210 and reception antenna 200 which helps it to determine the level of data traffic between user equipment 44 and base station 22.

Determination logic 230 operates to determine whether data traffic between user equipment 44 and the network node 22 has reached a predetermined threshold, that step is illustrated in Figure 3 as step 310. If the data traffic being experienced by base station 22 has not reached a predetermined threshold (that is to say if the data traffic being experienced by base station 22 is still too high) the controller 220 and determination 230 simply re-measure the level of data traffic at a later time interval. If, however, determination logic 230 determines that the data traffic has reached a sufficiently low level, it then communicates with implementation logic 240.

Implementation logic 240 operates to implement a modified communication regime between the base station 22 and user equipment 44, that step is illustrated as step 320 in Figure 3. The modified communication regime implements a discontinuous transmission and/or reception mode at base station 22. During such a discontinuous transmission or reception mode, base station 22 operates to periodically shut off its transmitter and/or receiver and periodically wakes up to transmit its pilot channel or to transmit packets of data or to receive information and data from user equipment 44. In such a modified data communication regime, base station 22 is periodically switched between a first state in which data transfer between the base station and the user equipment 44 is fully supported and a second state in which data transfer between the base station 22 and user equipment 44 is limited and may be wholly inactive.

Since user equipment 44 must be made aware of such a modified communication regime in order to maintain contact with the wireless telecommunication network, it is necessary for base station 22 to operate to inform user equipment 44 of an imminent change to the communication regime and to communicate to user equipment 44 the parameters of that change including a commencement time and, for example, the duration of the on and off periods during which transmission and reception may or may not be fully operational at base station 22. That method step is illustrated as step 330 in Figure 3.

It will be understood that step 330 is carried out by implementation logic 240 in conjunction with transmission antenna 210 and that a Node B will typically signal to all user equipment 44 via a broadcast message sent via transmission antenna 210.

Implementation logic 240 also operates to communicate with reception antenna 200 and transmission antenna 210 to commence a modified communication regime. That step is illustrated as step 340 in Figure 3.

In one particular embodiment, it is envisaged that base station 22 and particularly control unit 220 will use system frame numbers (SFN) to identify framing and timing of a cell in a Node B. To synchronise the necessary user equipment transmission and/or reception cycle in accordance with a discontinuous transmission or reception cycle implemented by a base station 22, wake up time may be based on system frame number. In such an arrangement, a base station and all user equipment 44 served by that base station, will be instructed to wake up at a specific system frame number. Typically that system frame number will be calculated using an algorithm.

Base station controller 220 will be operable to calculate the discontinuous transmission and/or reception cycle the parameters to be set by the algorithm may include when to wake up and the length of the wake up time in terms of a number of system frames. It will be understood that the algorithm can be configured by an operator and may be calculated based upon, for example, expected speed of user equipment 44 being served by that base station 22. The particular system frame numbers identified to implement a particular discontinuous and/or reception regime may be broadcast to user equipment 44 via a system information block.

Base station 22 may be operable to decide to commence discontinuous transmission based on downlink traffic (that is information transmitted via transmission antenna 210 to user equipment 44). In such a case, base station 22 will be operable to signal to all user equipment via a broadcast message for example, a master information block, that a modified communication regime is about to begin. The base station 22 specifies in which system frame number the discontinuous transmission shall begin. The base station 22 and user equipment 44 both calculate that system frame number based on a common parameter in which they need to wake up so that downlink traffic can occur.

Analogously, base station 22 may decide to start discontinuous reception based on uplink traffic, for example based upon scheduling information sent by user equipment 44 to base station 22 and determined by base station controller 220. Similarly in a situation to discontinuous transmission, base station 22 may be operable to broadcast to user equipment 44 the system frame number in which the discontinuous reception cycle will start.

Exiting discontinuous transmission mode may be determined base upon the amount of downlink traffic or uplink traffic determined to be occurring in a cell by base station controller 220.

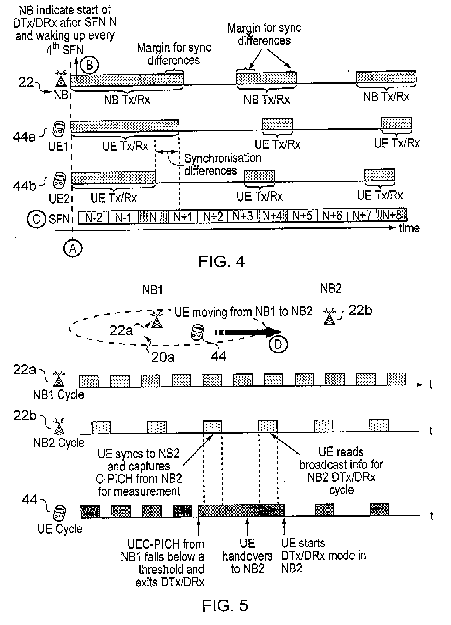

Figure 4 illustrates a representation of an implementation of a modified communication regime according to one aspect. Figure 4 illustrates a base station 22 which has identified that it needs to commence a modified communication regime. At time A it identifies that it needs to implement a discontinuous transmission and/or reception communication regime and as indicated by arrow B broadcasts a message to user equipment UE1, UE2 (44a, 44b) which indicates that the modified data communication regime will commence at system frame number N and that the on period will last one frame number and that base station 22 will wake up at every fourth system frame. Arrow C at Figure 4 illustrates system frame numbers as set by base station 22. It will be appreciated that user equipment 44a, 44b served by base station 22 may not all be perfectly synchronised and therefore some allowance has to be made for synchronisation differences between user equipment. Base station 22 therefore implements a modified data communication regime in which an allowance is made for synchronisation differences between user equipment. Returning now to Figure 4, base station 22 indicates in SFN-2 that is shall commence discontinuous and/or reception mode after SFN N and that the wake up cycle is every fourth SFN. The length of the wake up time is one frame. Since there are synchronisation differences between user equipment 44a and 44b base station 22 makes allowances and actually has a slightly longer implemented wake up time. Base station transmission and reception stops after SFN N to ensure that all uplink and downlink packets are received. After SFN N no transmission or reception occurs and at this point the base station power amplifier is inactive thereby conserving energy. SFN N+4 all user equipment 44a, 44b and the node B22 wake up and are operable to achieve transmission and reception of data packets. It will be seen that a similar pattern is followed for SFN N+8.

Discontinuous transmission and reception need not run concurrently. That is, base station 22 may be in discontinuous reception mode but still continue to transmit downlink traffic (for example, C-PICH and broadcast information) continuously. In this scenario, user equipment 44a, 44b would only be able to transmit when the base station is scheduled to be awake. Analogously, base station 22 may be in discontinuous transmission mode but still continue to continuously receive uplink traffic. In this mode, user equipment 44a, 44b would need to be expecting to operate without constant pilot channel support. It will be appreciated, however, that it may be easier to perform discontinuous transmission and reception together with a common wake up time for both receiver and transmitter at the base station. Such an arrangement has the benefit that user equipment 44a, 44b need only wake up once to both transmit and receive information to and from base station 22.

It is not expected that base stations 22 will be operable to implement discontinuous transmission and/or reception when user equipment 44 is in an active state. That is to say, when user equipment 44 served by base station 22 is involved in an active call, for example, base station 22 will not be able to implement a discontinuous transmission or reception regime. Nonetheless idle user equipment 44 moving between geographical areas served by base stations may be required to perform cell reselection during a discontinuous transmission and/or reception mode operated by either a first or a second base station.

Figure 5 is a schematic representation of user equipment according to one aspect moving between network nodes operating according to a modified communication regime. In Figure 5 user equipment 44 moves in direction D from an area 20a served by a first base station 22a towards an area served by a second base station 22b. Both base stations 22a, 22b are operating a discontinuous transmission and/or reception cycle. Those cycles are illustrated schematically, the blocks represent periods of full communication with user equipment. The x-axis in each graph represents time. It can be seen that the cycles employed by base station 22a and 22b differ in repetition period. The ON and OFF states of user equipment 44 are also shown schematically in Figure 5 the blocks representing ON and the horizontal axis representing progression of time. User equipment is expected to be able to perform cell reselection during a discontinuous transmission and/or reception mode. User equipment 44 operates to measure the strength of a pilot channel transmitted by base stations 22a, 22b. The user equipment uses that measurement of pilot channel, C-PICH or other measurement quantity used for mobility, and decides whether to reselect to another base station. In a case where the base station towards which user equipment 44 is moving is in a completely normal mode, user equipment will be able to measure the relevant measurement quantity from this node B and may use those measurements as a basis to reselect that base station.

The user equipment may be operable to exit from the discontinuous transmission and/or reception mode when it performs cells reselection. In a case, such as that shown in Figure 5, where the neighbouring base stations is also in discontinuous transmission and/or reception mode user equipment 44 may exit from discontinuous transmission and reception mode when the measurement quantity used for mobility on the base station to which it is currently attached is weak. For example, user equipment 44 may cross a threshold that is set internal by the user equipment or signalled by a base station. Once awake, user equipment 44 may detect the relevant measurement quantity used for mobility from a neighbouring base station and decide whether to perform cell reselection. It can be seen that user equipment 44 must be awake when performing cell reselection to a neighbouring base station regardless of whether the target base station is in discontinuous transmission and reception mode this is simply because system frame numbers between adjacent base stations are typically not synchronised and furthermore, as in the situation illustrated by Figure 5 adjacent base stations may be operating according to different discontinuous transmission and/or reception cycles. By being awake and performing cell reselection user equipment will be able to capture relevant broadcast information transmitted by base station 22b for it to determine the particular cycle employed by the target base station. Once it has successfully received the discontinuous cycle parameters it can enter discontinuous transmission and/or reception mode in the new cell. When user equipment 44 moves to another cell there may not be sufficient time for it to inform its original base station 22a of that change due to the discontinuous transmission and reception cycle in such a case, user equipment 44 may send a cell update to the new base station 22b.

In relation to Figure 5 user equipment 44 cycle initially follows the discontinuous transmission and reception cycle of base station 22a. As it moves towards base station 22b the measured C-PICH from base station 22a falls below a threshold and user equipment 44 exits discontinuous transmission and reception mode. After exiting that mode it performs measurement of signals received from possible neighbour cells. User equipment 44 measures the C-PICH from base station 22b during one of base stations 22b's wake up cycles and proceeds to measure it. User equipment 44 then decides to reselect to base station 22b and, upon entering the area served by base station 22b it captures a broadcast message detailing the parameters used for base stations 22b's discontinuous transmission and reception mode. Once user equipment 44 has knowledge of those parameters it may enter into the discontinuous transmission and reception mode operated by base station 22b.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling a network node in a wireless telecommunications network, said method comprising the steps of:
(i) determining whether data traffic between user equipment and said network node has reached a predetermined threshold and, if said predetermined threshold has been reached,
(ii) implementing a modified communication regime between said network node and said user equipment in which said network node is periodically switched between:
a first state in which data transfer between said network node and said user equipment is supported, and
a second state in which data transfer between said network node and said user equipment is limited.

2. A method according to claim 1, wherein in said second state said network node reduces its transmission power by switching to a reduced transmission power state which reduces user equipment coverage provided by said network node.

3. A method according to claim 1, wherein in said second state said network node switches to an inactive transmission state which provides no user equipment coverage by said network node.

4. A method according to any preceding claim, wherein in said second state said network node reduces its reception power by switching to a reduced reception power state which reduces user equipment coverage provided by said network node.

5. A method according to any of claims 1 to 3, wherein in said second state said network node switches to an inactive reception state which provides no user equipment coverage by said network node.

6. A method according to any preceding claim, wherein step (i) comprises determining whether said threshold has been reached by determining whether the level of data traffic sent from said network node to said user equipment has reached a predetermined level.

7. A method according to any preceding claim, wherein step (i) comprises determining whether said threshold has been reached by determining whether the level of data traffic sent to said network node from said user equipment has reached a predetermined level.

8. A method according to any preceding claim, wherein said periodic switching between said first state and said second state is substantially identical for both data transfer to said network node from said user equipment and data transfer from said network node to said user equipment.

9. A method according to any of claims 1 to 7, wherein said periodic switching between said first state and said second state differs for data transfer to said network node from said user equipment and data transfer from said network node to said user equipment.

10. A method according to any preceding claim, in which said method further comprises the step of:
(iii) transmitting a signal including an indication of commencement of said modified communication regime, said switching period and said data transfer between said base station and said user equipment to be modified.

11. A computer program product operable, when executed on a computer, to perform the method of any one of claims 1 to 10.

12. A network node for a wireless telecommunications network, said network node comprising:
determination logic operable to determine whether data traffic between user equipment and said network node has reached a predetermined threshold; and;
implementation logic, operable, if said predetermined threshold has been reached, to implement a modified communication regime between said network node and said user equipment in which said network node is periodically switched between:
a first state in which data transfer between said network node and said user equipment is supported, and
a second state in which data transfer between said network node and said user equipment is limited.

13. A method of controlling user equipment in a wireless telecommunications network, said method comprising the steps of:
(i) receiving an indication of a modified communication regime between a network node and said user equipment in which said network node is periodically switched between:
a first state in which data transfer between said network node and said user equipment is supported, and
a second state in which data transfer between said network node and said user equipment is limited; and
(ii) implementing a corresponding modified communication regime in which said user equipment is operable to communicate with said network when said network node is in said first state.

14. A computer program product operable, when executed on a computer, to perform the method of claim 13.

15. User equipment for a wireless telecommunications network, said user equipment comprising:
reception logic operable to receive an indication of a modified communication regime between a network node and said user equipment in which said network node is periodically switched between:
a first state in which data transfer between said network node and said user equipment is supported, and a second state in which data transfer between said network node and said user equipment is limited; and
implementing logic, operable to implement a corresponding modified communication regime in which said user equipment is operable to communicate with said network node when said network node is in said first state.

## Amended claims

### Amended claims in accordance with Rule 137(2) EPC.

**1.** A method of controlling a base station (22) in a wireless telecommunications network (10), said method comprising the steps of:
(i) determining (310) whether data traffic between user equipment (44) and said base station (22) has reached a predetermined low network data traffic threshold and, if said predetermined low network data traffic threshold has been reached, by determining whether the level of data traffic being sent from said base station (22) to said user equipment (44) has reached a predetermined level;
(ii) implementing (320) a modified communication regime comprising a discontinuous transmission and/or reception mode at said base station (22) between said base station (22) and said user equipment in which said base station (22) is periodically switched between:
a first state in which data transfer between said base station (22) and said user equipment (44) is supported, and
a second state in which data transfer between said base station (22) and said user equipment (44) is limited, and
(iii) transmitting (330) a signal including an indication of commencement of said modified communication regime, said switching period and said data transfer between said base station (122) and said user equipment (44) to be modified.

**2.** A method according to claim 1, wherein in said second state said base station (22) reduces its transmission power by switching to a reduced transmission power state which reduces user equipment (44) coverage provided by said base station (22).

**3.** A method according to claim 1, wherein in said second state said base station (22) switches to an inactive transmission state which provides no user equipment (44) coverage by said base station (22).

**4.** A method according to any preceding claim, wherein in said second state said base station (22) reduces its reception power by switching to a reduced reception power state which reduces user equipment (44) coverage provided by said base station (22).

**5.** A method according to any of claims 1 to 3, wherein in said second state said base station (22) switches to an inactive reception state which provides no user equipment coverage by said base station (22).

**6.** A method according to any preceding claim, wherein step (i) comprises determining whether said threshold has been reached by further determining whether the level of data traffic sent to said base station (22) from said user equipment (44) has reached a predetermined level.

**7.** A method according to any preceding claim, wherein said periodic switching between said first state and said second state is substantially identical for both data transfer to said base station (22) from said user equipment and data transfer from said base station (22) to said user equipment (44).

**8.** A method according to any of claims 1 to 6, wherein said periodic switching between said first state and said second state differs for data transfer to said base station from said user equipment and data transfer from said base station to said user equipment.

**9.** A computer program product operable, when executed on a computer, to perform the method of any one of claims 1 to 8.

**10.** A base station (22) for a wireless telecommunications network, said network node comprising:
determination logic (230) operable to determine whether data traffic between user equipment and said base station has reached a predetermined low network data traffic threshold by determining whether the level of data traffic being sent from said base station (22) to said user equipment (44) has reached a predetermined level;
implementation logic (240), operable, if said predetermined threshold has been reached, to implement a modified communication regime between said base station (22) and said user equipment (44) that modified communication regime comprising a discontinuous transmission and/or reception mode at said base station in which said base station (22) is periodically switched between:
a first state in which data transfer between said base station (22) and said user equipment is supported, and
a second state in which data transfer between said base station (22) and said user equipment (44) is limited, and
transmission logic operable to transmit from a signal transmitting (330) a signal including an indication of commencement of said modified communication regime, said switching period and said data transfer between said base station (22) and said user equipment (44) to be modified.

**11.** A method of controlling user equipment (44) in a wireless telecommunications network (10), said method comprising the steps of:
(i) receiving an indication of a modified communication regime comprising a discontinuous transmission and/or reception mode between a base station (22) and said user equipment (44) in which said base station (22) is periodically switched between:
a first state in which data transfer between said base station (22) and said user equipment is supported, and
a second state in which data transfer between said base station (22) and said user equipment is limited; and
(ii) implementing a corresponding modified communication regime comprising a discontinuous transmission and/or reception mode in which said user equipment is operable to communicate with said network when said base station (22) is in said first state.

**12.** A computer program product operable, when executed on a computer, to perform the method of claim 11.

**13.** User equipment (44) for a wireless telecommunications network (10), said user equipment (44) comprising:
reception logic operable to receive an indication of a modified communication regime comprising a discontinuous transmission and/or reception mode between a base station (22) and said user equipment (44) in which said base station (22) is periodically switched between:
a first state in which data transfer between said base station (22) and said user equipment is supported, and
a second state in which data transfer between said base station (22) and said user equipment (44) is limited; and
implementing logic, operable to implement a corresponding modified communication regime comprising a discontinuous transmission and/or
reception mode in which said user equipment is operable to communicate with said base station (22) when said base station (22) is in said first state.
